# EUROPÄISCHE PATENTSCHRIFT

(11) **EP 3 911 429 B1**
(45) Veröffentlichungstag und Bekanntmachung des Hinweises auf die Patenterteilung: **20.12.2023**
(21) Anmeldenummer: 20712539.4
(22) Anmeldetag: 18.03.2020
(51) Int. Cl.: B01D 29/23, B01D 29/64, B01D 29/68

(54) **FILTERVORRICHTUNG**
FILTER APPARATUS
DISPOSITIF DE FILTRATION

(30) Priorität: 04.06.2019 DE 102019003932
(43) Veröffentlichungstag der Anmeldung: 24.11.2021
(73) Patentinhaber: Hydac Process Technology GmbH, 66538 Neunkirchen (DE)
(72) Erfinder: SCHLICHTER, Bernhard, 66123 Saarbrücken (DE); GERSTNER, Jörg Hermann, 66346 Püttlingen (DE); BUGROV, Dimitri, 66606 St. Wendel (DE)
(74) Vertreter: Bartels und Partner, Patentanwälte
(86) Internationale Anmeldenummer: PCT/EP2020/057406
(87) Internationale Veröffentlichungsnummer: WO 2020/244823

(56) Entgegenhaltungen:
- DE-A1- 3 611 075
- DE-A1- 4 423 812
- DE-A1-102017 002 646
- US-A1- 2013 087 495
- US-B1- 6 337 013

## Beschreibung

Die Erfindung betrifft eine Filtervorrichtung mit den Merkmalen im Oberbegriff von Anspruch 1.

Eine gattungsgemäße Filtervorrichtung ist durch DE 10 2017 001 970 A1 bekannt. Für die Betriebssicherheit und Lebensdauer von Verbrennungsmotoren ist die einwandfreie Beschaffenheit des Schmieröls von großer Bedeutung. Insbesondere stellt ein Dauerbetrieb von Dieselmotoren, die beispielsweise bei maritimen Anwendungen mit Schweröl betrieben sind, besonders hohe Anforderungen an die Beschaffenheit des Schmieröls, so dass bei solchen Anwendungen der Einsatz von Filtervorrichtungen der genannten Art zur Schmierölreinigung unerlässlich ist. Diesbezüglich ist es Stand der Technik (DE 34 43 752 A1) Filtervorrichtungen zu benutzen, bei denen Filtereinsätze rückspülbar sind, um längere Laufzeiten zwischen dem Wechsel von Filtereinsätzen zu ermöglichen und dadurch die Wartungskosten gering zu halten.

Die Effizienz der Abreinigung beim Rückspülen hängt bei Vorrichtungen der genannten Art in hohem Maße vom Verlauf des Rückspülvolumenstroms ab, der sich bei der an der spaltförmigen Durchtrittsöffnung zur Verfügung stehenden Druckdifferenz durch den Strömungsraum zur fluidführenden, d.h. hohlen Antriebswelle, erstreckt. Die beim Rückspülvorgang am Spalt der Durchtrittsöffnung wirksame Druckdifferenz, die bei den Umgebungsdruck führender Antriebswelle und vom Systemdruck erzeugtem Rückspüldruck, beispielsweise 1,5 bar, beträgt, soll eine möglichst hohe Eintrittsgeschwindigkeit am Spalt und einen möglichst hohen Rückspülvolumenstrom ermöglichen.

Um dieses Ziel zu erreichen, ist bei der bekannten gattungsgemäßen Lösung (DE 10 2017 001 970 A1) vorgesehen, das jeweilige Rückspülorgan mit seiner einen freien Stirnseite, die die spaltförmige Durchtrittsöffnung aufweist, die der Innenwand des zuordenbaren Filtereinsatzes zugewandt ist, abstandsfrei an dieser Innenwand mittels der drehbaren Antriebswelle vorbeizuführen, wobei bei dieser bekannten Lösung vorgesehen ist, dass in einer weiteren Ebene quer zu der einen Ebene, in der die Durchtrittsöffnung liegt, sich der Strömungsraum, ausgehend von dieser Durchtrittsöffnung, in Richtung der Antriebswelle kontinuierlich erweitert, so dass der Strömungsraum eine Art Diffusor ausbildet, was in vorteilhafter Weise zu einer Verringerung des Druckverlustes und damit zur Maximierung des Rückspülvolumenstroms sowie der Eintrittsgeschwindigkeit am Spalt der Durchtrittsöffnung führt.

Bei einer weiteren gattungsgemäßen, bekannten Lösung nach DE 10 2017 002 646 A1 wird das jeweilige Rückspülorgan mit seiner Durchtrittsöffnung wiederum abstandsfrei entlang der Innenseite des zuordenbaren Filtereinsatzes geführt, wobei die dahingehend abstandsfreie Anordnung mittels einer Einstelleinrichtung vorgebbar ist, mit der Möglichkeit einen Toleranzausgleich zur Verfügung zu stellen, so dass auch innerhalb der üblichen Toleranzbereiche eine optimale abstandsfreie Anlage der spaltförmigen Durchlassöffnung des jeweiligen Rückspülorgans an der Wand des Filtermaterials ermöglicht ist.

Weitere Filtervorrichtungen gehen aus der US 6 337 013 B1, der DE 44 23 812 A1 und der US 2013/0087492 A1 hervor.

Ausgehend von diesem Stand der Technik liegt der Erfindung die Aufgabe zugrunde, unter Beibehalten der Vorteile der bekannten Lösungen, eine gute Filtrier- und Rückspülleistung zur Verfügung zu stellen, dahingehend weiter zu verbessern, dass in kostengünstiger Weise sowie wartungs- und montagefreundlich eine solche Filtervorrichtung sich realisieren lässt. Eine dahingehende Aufgabe löst eine Filtervorrichtung mit den Merkmalen des Patentanspruchs 1 in seiner Gesamtheit.

Dadurch, dass gemäß dem kennzeichnenden Teil des Patentanspruchs 1 der Abstand ein Achtel bis eine halbe Spaltweite der Durchtrittsöffnung dieses Rückspülorgans ist, zumindest ein Teil des Filtereinsatzes zwischen zwei Stützkörpern ein Unfiltrat filtrierendes, mehrlagiges Gewebe aufweist und die Dicke der beiden Stützkörper jeweils kleiner oder gleich dem 1,5-fachen der Spaltweite der Durchtrittsöffnung des zuordenbaren Rückspülorgans ist, lässt sich, ohne auf kompliziert aufbauende Diffusorelemente (DE 10 2017 001 970 A1) zurückgreifen zu müssen, eine Verringerung des Druckverlusts und damit eine Maximierung des Rückspülvolumenstroms sowie der Eintrittsgeschwindigkeit am Spalt der Durchtrittsöffnung erreichen, was insbesondere in der unmittelbaren Nähe der spaltförmigen Durchtrittsöffnung eine besonders effektive Abreinigung während des Rückspülvorgangs erlaubt. Des Weiteren lässt sich gegenüber den bekannten Lösungen die erfindungsgemäße Filtervorrichtung mit wenig Bauteilen in konstruktiv einfacher Weise realisieren, was zu einem wartungs- und montagefreundlichen Gesamtaufbau führt.

Die erfindungsgemäße Lösung ist in erster Linie für die Filtration wässriger Fluide vorgesehen, d.h. Seewasser für Ballastwasser, Scrubber (Nasswäscher) oder für die Trink-, Brauch- und Prozesswassergewinnung auf Schiffen. Darüber hinaus dient die erfindungsgemäße Lösung der Filtration industrieller Prozesswässer sowie von Oberflächenwasser.

Bei einer vorteilhaften Ausführungsform der erfindungsgemäßen Filtervorrichtung ist vorgesehen, dass der Abstand zwischen dem jeweiligen Rückspülorgan und dem benachbart zuordenbaren Filtereinsatz mittels einer Einstelleinrichtung vorgebbar ist, wie sie beispielhaft in der DE 10 2017 002 646 A1 aufgezeigt ist. Das Rückspülorgan lässt sich jedoch auch mit einem konstruktiv vorgegebenen Abstand stationär an der Antriebswelle mit ihrem Strömungsraum anordnen, wie dies beispielhaft in der DE 10 2017 001 970 A1 aufgezeigt ist.

Es hat sich gezeigt, dass, wenn in vorteilhafter Weise das jeweilige Rückspülorgan mittels der sich drehenden Antriebswelle eine Umfangsgeschwindigkeit zwischen 0,1 bis 0,5 m/s erfährt, bereits eine einzige volle Umdrehung um 360° um die Längsachse der Antriebswelle genügt, dass eine wesentliche oder im Wesentlichen vollständige Rückspülung zumindest eines Teils des Gesamt-Filtereinsatzes vorliegt. Ferner hat es sich gezeigt, dass die erfindungsgemäße Filtervorrichtung sich von ihrem Filtrier- und Rückspülbetrieb weiter optimieren lässt, sofern man auf bestimmte Lagenaufbauten für das Filtermaterial nebst seinen Stütz- und/oder Schutzkörpern zurückgreift sowie von der geometrischen Ausgestaltung her vorgebbare Größenordnungen einhält. Die dahingehenden Ausgestaltungen sind Gegenstand der weiteren Unteransprüche.

Nachstehend ist die Erfindung anhand von in der Zeichnung dargestellten Ausführungsbeispielen im Einzelnen erläutert. Es zeigen in prinzipieller und nicht maßstäblicher Weise:
- Fig. 1: eine perspektivische Schrägansicht auf einen Teil der erfindungsgemäßen Filtervorrichtung; sowie
- Fig. 2 und 3: teilweise im Horizontalschnitt, teilweise in Ansicht einen Teil der in Fig. 1 gezeigten Filtervorrichtung mit einem plissierten bzw. glatt ausgebildeten Filtermaterial.

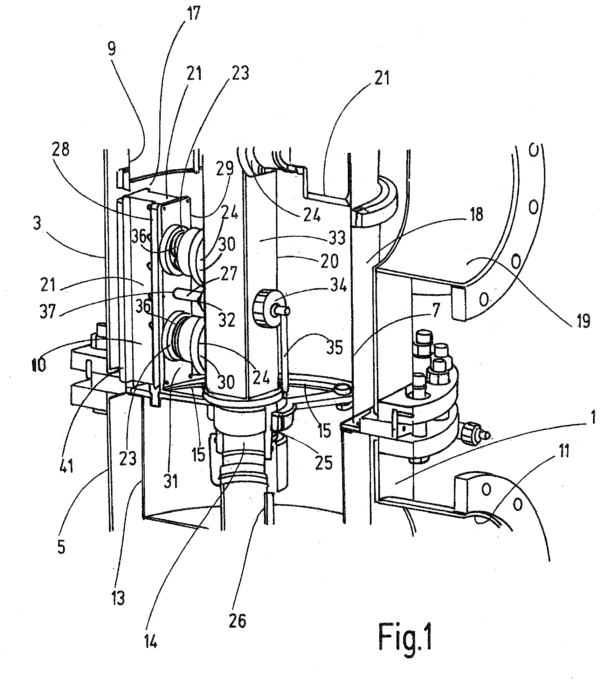

Die Fig. 1 zeigt die wesentlichen Teile der Filtervorrichtung. Diese weist ein als Ganzes mit 1 bezeichnetes Filtergehäuse auf, das von seinem Aufbau her dem einschlägigen Stand der Technik (s. Fig. 1 von DE 20 2016 003 089 U1) entspricht. In der verkürzten Darstellung nach der Fig. 1 ist daher vom Filtergehäuse 1 nur ein Teil des Gehäusehauptteils 3 und eines sich an dieses unten anschließenden Gehäusebodens- oder Eingangsteils 5 dargestellt. Im Hauptteil 3 sind ein erster Filtereinsatz 7 und ein zweiter darüberliegender Filtereinsatz 9 angeordnet, von denen lediglich der untere in Gänze sichtbar ist. Am Bodenteil 5 befindet sich ein seitlicher Einlass 11 in Form eines Ringstutzens, der nur teilweise dargestellt ist und über den Unfiltrat beim Filtrierbetrieb in das Bodenteil 5 einströmt. Ferner gelangt das Unfiltrat nach Durchströmen eines Eingangsfilters 13, das bei maritimen Anwendungen als sog. Fischsieb vorgesehen ist, über Durchgänge 15 in den inneren Hohlraum der Filtereinsätze 7 und 9, die jeweils eine Innenseite 17 aufweisen. Bei dem die Filtereinsätze 7, 9 von innen nach außen durchströmendem Filtriervorgang gelangt das Fluid anschließend in den die Filtereinsätze 7, 9 umgebenden Raum 18, der im Hauptteil 3 die Filtratseite bildet, aus dem das Filtrat über einen seitlichen Filtratauslass 19 wiederum in Form eines nur teilweise dargestellten Ringstutzens abströmt.

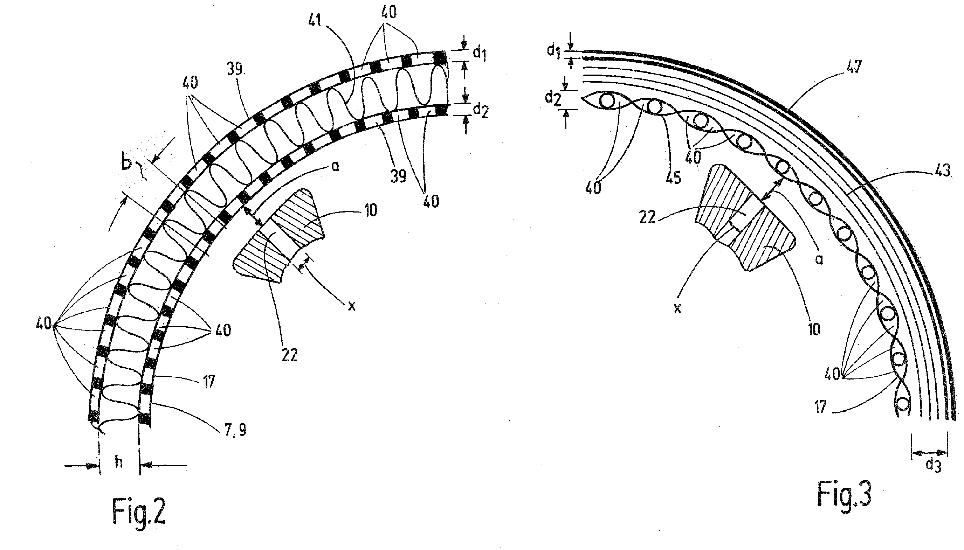

An einer durch ein Vierkantrohr gebildeten Antriebswelle 20 ist für jeden Filtereinsatz 7, 9 ein Rückspülorgan 10 vorhanden, das in einem Aufnahmegehäuse 21 zwei übereinanderliegend angeordnete Rückspül-Teilorgane (nicht dargestellt) aufweist. Der dahingehende Aufbau ist in der DE 10 2017 002 646 A1 eingehend beschrieben, so dass an dieser Stelle nur noch insofern darauf eingegangen wird, als er für die Funktion der erfindungsgemäßen Lösung von Bedeutung ist. Das als Rückspülorgan 10 dienende Aufnahmegehäuse 21 weist eine spaltförmige Durchtrittsöffnung 22 auf, die sich auf der Vorderseite des Aufnahmegehäuses 21, die der Innenseite 17 des jeweiligen Filtereinsatzes 7, 9 zugewandt ist, bis auf ihre Abschlussbegrenzungen im Wesentlichen über die gesamte Höhe, gemessen parallel zur Drehachse der Antriebswelle 20, erstreckt. Die parallel zur Drehachse für die Antriebswelle 20 verlaufende Durchtrittsöffnung 22 wird bei einer Drehbewegung der Antriebswelle 20 für einen gesamten Umlauf von 360° mit vorgebbarem Abstand a (s. Fig. 2 und 3) entlang der Innenseite 17 des jeweils zuordenbaren Filtereinsatzes 7, 9 geführt. Die Durchtrittsöffnung 22, die mittig an der freien Stirnseite des Aufnahmegehäuses 21 angeordnet ist, kann auch in mehrere Spaltöffnungen (nicht dargestellt) unterteilt sein. Auch besteht die Möglichkeit, bei einer nicht näher dargestellten Ausführungsform bei mehreren Spaltöffnungen diese in radialer Richtung mit einem vorgebbaren Abstand zueinander an dem Aufnahmegehäuse 21 versetzt anzuordnen. Vorzugsweise sind für jeden Filtereinsatz 7, 9 je ein Rückspülorgan 10 vorhanden, die in axialer Übereinanderanordnung paarweise einander gegenüberliegend um mindestens 90°, vorzugsweise um 180° zueinander versetzt, an der hohlen Antriebswelle 20 angreifen. Es können, in der Art von Spülköpfen konzipiert, mehr als zwei und bis zu zwölf Rückspülorgane 10 eingesetzt werden. Auch können für einen Filtereinsatz 7, 9 mehr als ein Rückspülorgan 10 eingesetzt werden. Bei Einsatz von drei Rückspülorganen 10 sind diese radial um 120°, bei vier Rückspülorganen 10 um 90° versetzt zueinander angeordnet.

Die jeweilige Durchtrittsöffnung 22 setzt sich im Inneren der nicht näher dargestellten Teilorgane in einem Strömungsraum 14 fort, der über je eine Fluidführung 23 mit dem Inneren der Antriebswelle 20 als Teil des Raumes 14 in Verbindung ist. Diese Fluidführungen 23 sind in einem an der Antriebswelle 20 befindlichen Anschlussteil 24 teleskopartig und insoweit längsverfahrbar geführt. Die Antriebswelle 20 ist dem Stand der Technik nach über einen Elektromotor entsprechend antreibbar und drehbar gelagert, wobei von den Lagerungen lediglich ein unteres Drehlager 25 sichtbar ist, an den das untere Ende der Antriebswelle 20 in fluidführender Weise in ein Schlammablassrohr 26 übergeht.

Für die Zustellung des Aufnahmegehäuses 21, d.h. die Einstellung des Abstandes a der spaltförmigen Durchtrittsöffnungen 22 von der Drehachse der Antriebswelle 20 ist eine Einstelleinrichtung mit einem Spindeltrieb vorgesehen. Dieser weist bei dem Ausführungsbeispiel nach der Fig. 1 eine Gewindespindel 27 auf, die in zur Drehachse senkrechter Richtung durch die Antriebswelle 20 durchgeführt ist. Die Gewindespindel 27 bildet ein Zustellmittel, das mit ihrem dem Aufnahmegehäuse 21 zugewandten Ende mit diesem in der Mitte verbunden ist. Das Aufnahmegehäuse 21 hat die Form eines leistenartigen Körpers mit Langseiten 28 und 29, die zur Drehachse der Antriebswelle 20 parallel verlaufen, wobei im Inneren des Aufnahmegehäuses 21 die genannten beiden Teilorgane mit der Hochachse fluchtend zwischen den Langseiten 28, 29 übereinanderliegend angeordnet sind.

Die Fluidführungen 23 der beiden Teilorgane weisen jeweils ein Ausgangsrohr 30 auf, das teleskopartig in dem zugehörigen Anschlussteil 24 der Antriebswelle geführt ist. Das dem Aufnahmegehäuse 21 zugewandte Ende der Gewindespindel 27 ist mit dem Aufnahmegehäuse 21 an einer Platte 31 verbunden, die die der Antriebswelle 20 zugewandte Endwand des Aufnahmegehäuses 21 bildet. Die Verbindungsstelle 37 mit dem Spindeltrieb 27 liegt in der Mitte zwischen den Fluidführungen 23. Für die Positionseinstellung der Gewindespindel 27 ist an der dem Aufnahmegehäuse 21 zugewandten Außenseite der Antriebswelle 20 eine Mutter 32 festgelegt, die mit dem Außengewinde der Gewindespindel 27 in Gewindeeingriff ist. An der gegenüberliegenden Außenseite 33 der Antriebswelle 20 ist eine Mutter 32 festgelegt, die mit dem Außengewinde der Gewindespindel 27 in Gewindeeinsatz ist. An der gegenüberliegenden Außenseite 33 der Antriebswelle 20 ist eine Rändelmutter 34 mit dem Außengewinde der Gewindespindel 27 in Gewindeeingriff. An dem über die Rändelmutter 34 vorstehenden freien Ende der Gewindespindel 27 befindet sich ein manuell betätigbarer Drehhebel 35.

Die Verbindung 37 des Endes der Gewindespindel 27 an der Platte 31 des Aufnahmegehäuses 21 ist so ausgeführt, dass die Spindel 27 relativ zum Aufnahmegehäuse 21 drehbar ist; jedoch durch die Spindel 27 die radial nach außen ausgefahrene Position des Aufnahmegehäuses 21 begrenzt ist. Diese Position ist dadurch einstellbar, dass bei nicht festgezogener Rändelmutter 34 beim Verdrehen der Gewindespindel 27 mittels des Hebels 35 durch den Gewindeeingriff mit der Mutter 32 die Axialposition der Spindel 27 und damit die voll ausgefahrene Endstellung des Aufnahmegehäuses 21 vorgegeben wird. Durch Festziehen der Rändelmutter 34 wird die Drehposition der Spindel 27 gesichert und damit die Einstellung auf den vorgegebenen Abstand a arretiert. Ferner können an den Fluidführungen 23 Federelemente 36 eingefügt sein, die das Aufnahmegehäuse 21 für eine Zustellung radial nach außen belasten, so dass die Verbindung 37 zwischen Spindel 27 und Platte 31 mit Vorteil in der Art eines Loslagers ausgeführt sein kann, das eine Bewegung des Aufnahmegehäuses 21 radial nach außen über den vorgebbaren Abstand a hinaus formschlüssig begrenzt, jedoch eine Kippbewegung des Aufnahmegehäuses 21 für einen Toleranzausgleich um eine zu dessen Hauptachse quer verlaufende Achse zulässt und gegebenenfalls ein Axialspiel für einen Federweg radial nach innen zur Verfügung stellt. Anstelle der Abstandseinstellung mittels eines Spindeltriebes lässt sich das Rückspülorgan 10 mit der jeweiligen Durchtrittsöffnung 22 auch fest mit dem vorgebbaren Abstand a an der Antriebswelle 20 anordnen (nicht dargestellt).

Die Filtereinsätze 7, 9, die gemäß der Darstellung nach der Fig. 1 unmittelbar stirnseitig aneinanderstoßen, sind als Hohlzylinder konzipiert mit kreiszylindrischem Querschnitt. Diese lassen sich auch voneinander beabstandet in einem Filterkorb der Filtervorrichtung entsprechend einsetzen. Als besonders vorteilhaft hat es sich erwiesen, dass für eine vollständige Abreinigung des jeweiligen Filtereinsatzes 7, 9 das jeweils zuordenbare Rückspülorgan 10 mittels der sich drehenden Antriebswelle 20 eine Umfangsgeschwindigkeit zwischen 0,1 bis 0,5 m/s erfährt, so dass eine vollständige oder im Wesentlichen vollständige Rückspülung des jeweiligen Filtereinsatzes 7, 9 vorliegt, sobald eben das zuordenbare Rückspülorgan 10 eine volle Umdrehung um 360° um die Längsachse der Antriebswelle 20 durchführt. Wie insbesondere der Querschnitt nach der Fig. 2 zeigt, der einen Ausschnitt aus dem Hohlzylinder des jeweiligen Filtereinsatzes 7, 9 betrifft, ist zwischen zwei hohlzylindrischen Stützkörpern 39 ein mehrlagiges, Unfiltrat filtrierendes Gewebe 41 angeordnet. Ferner ist in stark vereinfachter Darstellung ein vorderer Teil des Rückspülorgans 10 dargestellt mit der spaltartigen Durchtrittsöffnung 22 in der Mitte. Die Durchtrittsöffnung 22 hat zumindest im Bereich des Austritts aus der vorderen Stirnseite des Rückspülorgans 10 eine Spaltweite x von beispielsweise 15 mm. Wie sich des Weiteren aus der Fig. 2 ergibt, ist das Rückspülorgan 10 mit einem vorgebbaren Abstand a entlang der Innenseite 17 des Einsatzes 7, 9 geführt. Für ein verbessertes Rückspülergebnis ist dabei der Abstand a deutlich größer Null gewählt und beträgt ein Achtel bis eine halbe Spaltweite x der Durchtrittsöffnung 22 für das Rückspülorgan 10. Ferner hat es sich für die Rückspülung als vorteilhaft erwiesen, wenn die Dicke d₁ des äußeren Stützkörpers 39 und die Dicke d₂ des inneren Stützkörpers 39 kleiner oder gleich dem 1,5-fachen der Spaltweite x der Durchtrittsöffnung 22 des zuordenbaren Rückspülorgans 10 ist. Besonders bevorzugt ist dabei die Dicke d₁ gleich der Dicke d₂. Die genannten Stützkörper 39, die auch die Funktion eines Schutzkörpers für das Gewebe 41 erfüllen, sind im vorliegenden Fall aus einem perforierten Blech gebildet und die beiden Stützkörper 39 zusammen mit dem Gewebe 41 bilden den jeweiligen Filtereinsatz 7, 9 aus. Anstelle des perforierten Blechs können die Stütz- und/oder Schutzkörper 39 jeweils einzeln auch aus einem Drahtgewebe, einem Spaltsieb, einem Streckmetall bestehen oder aus einer Gitterstruktur oder aus einer spiralförmigen Umwicklung mit Draht gebildet sein.

Das filtrierende Gewebe 41 selbst besteht aus mindestens einer Stütz- und/ oder Drainagelage, vorzugsweise aus zwei solcher Lagen, und weist ferner eine dazwischenliegende Filterlage auf. In besonders vorteilhafter Weise ist das Gewebe 41 drei- bis fünflagig aufgebaut. Für die Rückspülung als besonders vorteilhaft hat sich erwiesen, die Faltenhöhe h kleiner oder gleich der 1,9-fachen Spaltweite x zu wählen. Ferner ist vorteilhaft, bei Verwendung eines plissierten Gewebes 41 die Faltenbreite b ±35 % erhöht oder verringert zu der Spaltweite x zu wählen.

Das mehrlagige Gewebe 41 nach der Fig. 2 verwendet als Stütz- und/oder Drainagelage solche aus Drahtgewebe, Streckmetallgittern und/oder perforierten Sieben, wie Mikrosieben. Die jeweilige Filterlage zwischen den vorstehend genannten Lagen besteht aus Geweben, wie Drahtgeweben und/ oder Vliesstoffen, wie Metallfaservliesen. Die jeweilige Filterlage soll dabei vorzugsweise Durchlässe 40 aufweisen, deren Durchlassweite jeweils zwischen 0,1 und 1000 *µ*m, vorzugsweise zwischen einem und 100 *µ*m, liegt.

Die Fig. 3 wird nur noch insoweit beschrieben, als sie sich wesentlich von der Ausführungsform nach der Fig. 2 unterscheidet. Die insoweit zu der Fig. 2 getroffenen Ausführungen gelten in sinnfälliger Weise demgemäß auch für die Ausführungsform nach der Fig. 3, bei der anstelle eines plissierten Gewebes 41 nunmehr ein mehrlagiges Glattgewebe 43 Verwendung findet. Bei der Verwendung von derartigen Glattgeweben 43, beträgt die Spaltweite x für das Rückspülorgan 10 vorzugsweise ungefähr 15 mm, wobei der Abstand a zwischen der Durchtrittsöffnung 22 des jeweiligen Rückspülorgans 10 und der Innenseite 17 des jeweiligen Einsatzes 7, 9 wiederum vorzugsweise ein Achtel bis eine halbe Spaltweite x der konstant gewählten Durchtrittsöffnung 22 ist. Der innere hohlzylindrische Stützkörper 45 ist aus einem Drahtgewebe gebildet, und der äußere Stützkörper 47, der das Glattgewebe 43 nach außen abstützt, besteht aus einem Spaltsieb, bei dem ein auf Spaltmaß mit seinen Wicklungen auf Abstand gehaltener Stützdraht als Stütz- und Schutzkörper 47 dient.

Bei Verwendung des mehrlagigen Glattgewebes 43 ist dessen Dicke d₃ wiederum vergleichbar der Faltenhöhe für das plissierte Gewebe 41 kleiner oder gleich der 1,9-fachen Spaltweite x. Auch hier liegen die Durchlässe 40 für die jeweilige Filterlage bei den Durchlassweiten für das plissierte Gewebe 41. Für die beiden Stützkörper 45, 47 lassen sich auch anders geartete Stützkörper verwenden, wie beispielhaft für die Lösung nach der Fig. 2 aufgezeigt. Ebenso lässt sich die jeweilige Filterlage für das Glattgewebe 43 entsprechend aufbauen. Auch für die Ausführungsform nach der Fig. 3 ist vorteilhaft, wenn das jeweilige Rückspülorgan 10 mittels der sich drehenden Antriebswelle 20 eine Umfangsgeschwindigkeit zwischen 0,1 bis 0,5 m/s erfährt.

Für die angestrebte Feinfiltration in automatischen Rückspülfiltern gemäß der erfindungsgemäßen Filtervorrichtungslösung sollen bevorzugt Filtermaterialien auf der Basis von Edelstahlgeweben 41, 43 eingesetzt werden. Im Vergleich zu konventionellen Spaltsieben, Mikrosieben oder ähnliches, bieten gewebte Filtermaterialien, wie vorgestellt, im angestrebten Filtrationsbereich von 5 bis100 *µ*m grundsätzlich ein besonders hohes Maß an offener Filterfläche und damit in der Folge eine hohe Schmutzaufnahmekapazität bei minimalem Druckverlust, der sich auch günstig für die Rückspülung erweist. Die hier vorzugsweise zum Einsatz kommenden Edelstahldrahtgewebe für die Filterlagen haben bei offener Filterfläche weiter den Vorteil, dass ihre mechanische und thermische Stabilität hoch ist.

Der innere Strömungsraum 14 der Antriebswelle 20 kann an eine nicht näher dargestellte Ventileinrichtung oder an ein Saugpumpe angeschlossen sein, um dergestalt im Strömungsraum 14 und am freien Ende der jeweiligen Durchtrittsöffnung 22 einen Unterdruck aufzubauen, der die Abreinigung bei der Rückspülung der Filtereinsätze 7, 9 erleichtert.

## Patentansprüche

1. Filtervorrichtung mit einem Filtergehäuse (1) mit einem Fluideinlass (11) für Unfiltrat und mit einem Fluidauslass (19) für Filtrat und mit mindestens einem im Filtergehäuse (1) aufgenommenen ein- oder mehrteiligen Filtereinsatz (7, 9), der mit mindestens einem Rückspülorgan (10) im Gegenstrom zur Filtrierrichtung abreinigbar ist, das mittels einer fluidführenden Antriebswelle (20) eines Drehantriebes entlang der Innenseite (17) des jeweiligen Filtereinsatzes (7, 9) verfahrbar ist und an seinem dieser Innenseite (17) benachbarten Ende eine spaltförmige Durchtrittsöffnung (22) mit vorgebbarer Spaltweite (x) aufweist, die parallel zur Drehachse der Antriebswelle (20) verläuft und die in einen mit der Antriebswelle (20) fluidführend verbundenen Strömungsraum (14) einmündet, wobei ein vorgebbarer Abstand (a) zwischen der Durchtrittsöffnung (22) des jeweiligen Rückspülorgans (10) und dem benachbart zugeordneten Filtereinsatz (7, 9) besteht, **dadurch gekennzeichnet,**
**dass** der Abstand (a) ein Achtel bis eine halbe Spaltweite (x) der Durchtrittsöffnung (22) dieses Rückspülorgans (10) ist,
**dass** zumindest ein Teil des Filtereinsatzes (7, 9) zwischen zwei Stützkörpern (39; 45, 47) ein Unfiltrat filtrierendes, mehrlagiges Gewebe (41; 43) aufweist, und
**dass** die Dicke (d₁, d₂) der beiden Stützkörper (39; 45, 47) jeweils kleiner oder gleich dem 1,5-fachen der Spaltweite (x) der Durchtrittsöffnung (22) des zuordenbaren Rückspülorgans (10) ist.

2. Filtervorrichtung nach Anspruch 1, **dadurch gekennzeichnet, dass** der Abstand (a) zwischen dem jeweiligen Rückspülorgan (10) und dem benachbart zuordenbaren Filtereinsatz (7, 9) mittels einer Einstelleinrichtung (27) vorgebbar ist.

3. Filtervorrichtung nach Anspruch 1 oder 2, **dadurch gekennzeichnet, dass** das jeweilige Rückspülorgan (10) mittels der sich drehenden Antriebswelle (20) eine Umfangsgeschwindigkeit zwischen 0,1 bis 0,5 m/s erfährt.

4. Filtervorrichtung nach einem der vorstehenden Ansprüche, **dadurch gekennzeichnet, dass** eine vollständige oder im Wesentlichen vollständige Rückspülung zumindest eines Teils des Filtereinsatzes (7, 9) vorliegt, sobald das zuordenbare Rückspülorgan (10) eine volle Umdrehung um 360° um die Längsachse der Antriebswelle (20) durchführt.

5. Filtervorrichtung nach einem der vorstehenden Ansprüche, **dadurch gekennzeichnet, dass** das mehrlagige Gewebe (41, 43) aus mindestens einer Stütz- und/oder Drainagelage, vorzugsweise aus zwei solcher Lagen besteht sowie einer Filterlage.

6. Filtervorrichtung nach einem der vorstehenden Ansprüche, **dadurch gekennzeichnet, dass** das mehrlagige Gewebe (41, 43) glatt oder plissiert verlaufend ausgebildet ist und dass die Dicke (d₃) des glatten Gewebes (43) bzw. die Faltenhöhe (h) des plissierten Gewebes (41) kleiner oder gleich der 1,9-fachen Spaltweite (x) ist.

7. Filtervorrichtung nach einem der vorstehenden Ansprüche, **dadurch gekennzeichnet, dass** bei Verwendung eines plissierten Gewebes (41) die Faltenbreite (b) der Spaltweite (x) ± 35% dieser Spaltweite (x) entspricht.

8. Filtervorrichtung nach einem der vorstehenden Ansprüche, **dadurch gekennzeichnet, dass** die jeweilige Filterlage Durchlässe (40) aufweist, deren Durchlassweite jeweils zwischen 0,1 und 1000 *µ*m, vorzugsweise zwischen 1 und 100 *µ*m, liegt.

9. Filtervorrichtung nach einem der vorstehenden Ansprüche, **dadurch gekennzeichnet, dass** der innere und/oder der äußere, dem Rückspülorgan (10) zu- bzw. abgewandte Stütz- und/oder Schutzkörper (39; 45, 47) aus einem perforierten Blech oder einem Drahtgewebe oder einem Spaltsieb oder einem Streckmetall oder aus einer Gitterstruktur oder einer spiralförmigen Umwicklung mit Draht gebildet ist.

10. Filtervorrichtung nach einem der vorstehenden Ansprüche, **dadurch gekennzeichnet, dass** die Stütz- und/oder Drainagelagen des Gewebes (41; 43) aus Drahtgeweben, Streckmetallgittern und/oder perforierten Sieben, wie Mikrosieben bestehen, und dass die jeweilige Filterlage aus Geweben, wie Drahtgeweben und/oder Vliesstoffen, wie Metallfaservliesen, besteht.

## Claims

1. Filter device having a filter housing (1) with a fluid inlet (11) for unfiltered medium and with a fluid outlet (19) for filtrate and at least one one-piece or multi-part filter cartridge (7, 9) accommodated in the filter housing (1), which filter cartridge can be cleaned in counter-current flow to the filtration direction with at least one backflushing element (10), which backflushing element can be moved along the inside (17) of the respective filter cartridge (7, 9) by means of a fluid-conducting drive shaft (20) of a rotary drive and has, at its end adjacent to this inside (17), a slot-shaped passage opening (22) with a predefinable slot width (x), which extends parallel to the axis of rotation of the drive shaft (20) and which opens in a fluid-conducting manner into a flow chamber (14) connected to the drive shaft (20), wherein there is a predefinable distance (a) between the passage opening (22) of the respective backflushing element (10) and the assigned filter cartridge (7, 9) adjacent thereto,
**characterised in that**
the distance (a) is preferably one eighth to one half of the slot width (x) of the passage opening (22) of this backflushing element (10),
**in that** at least part of the filter cartridge (7, 9) comprises a multi-layer fabric (41; 43) which filters unfiltered medium between two supporting bodies (39; 45, 47), and
**in that** the thickness (d₁, d₂) of the two supporting bodies (39; 45, 47) is less than or equal to 1.5 times the slot width (x) of the passage opening (22) of the assignable backflushing element (10) in each case.

2. Filter device according to claim 1, **characterised in that** the distance (a) between the respective backflushing element (10) and the assignable filter cartridge (7, 9) adjacent thereto can be preset by means of an adjusting device (27).

3. Filter device according to claim 1 or 2, **characterised in that** the respective backflushing element (10) is subjected to a circumferential speed between 0.1 and 0.5 m/s by means of the rotating drive shaft (20).

4. Filter device according to one of the preceding claims, **characterised in that** backflushing of at least part of the filter cartridge (7, 9) is complete or substantially complete as soon as the assignable backflushing element (10) performs a full rotation of 360° about the longitudinal axis of the drive shaft (20).

5. Filter device according to one of the preceding claims, **characterised in that** the multi-layer fabric (41, 43) consists of at least one supporting and/or drainage layer, preferably of two such layers, and a filter layer.

6. Filter device according to one of the preceding claims, **characterised in that** the multi-layer fabric (41, 43) is formed as a plain or pleated fabric, and **in that** the thickness (d₃) of the plain fabric (43) or the pleat height (h) of the pleated fabric (41) is less than or equal to 1.9 times the slot width (x).

7. Filter device according to one of the preceding claims, **characterised in that** when a pleated fabric (41) is used, the pleat width (b) corresponds to the slot width (x) ±35% of this slot width (x).

8. Filter device according to one of the preceding claims, **characterised in that** the respective filter layer has apertures (40), the aperture width of which is between 0.1 and 1000 µm, preferably between 1 and 100 µm, in each case.

9. Filter device according to one of the preceding claims, **characterised in that** the inner and/or the outer supporting and/or protective body (39; 45, 47), directed towards or away from the backflushing element (10), is formed from a perforated sheet or a wire mesh or a wedge wire screen or an expanded metal or from a lattice structure or a spiral wire wrapping.

10. Filter device according to one of the preceding claims, **characterised in that** the supporting and/or drainage layers of the fabric (41; 43) consist of wire meshes, expanded metal lattices and/or perforated screens, such as microscreens, and **in that** the respective filter layer consists of fabrics, such as wire meshes and/or non-wovens, such as metal fibre fleeces.

## Revendications

1. Dispositif de filtration comprenant une enveloppe (1) de filtre ayant une entrée (11) de fluide pour du non filtrat et une sortie (19) de fluide pour du filtrat et comprenant au moins un insert (7, 9) de filtre en une partie ou en plusieurs parties, qui est logé dans l'enveloppe (1) de filtre et qui peut être nettoyé à contre courant du sens de filtration par au moins un organe (10) de lavage en retour, qui, au moyen d'un arbre (20) d'entraînement, conduisant du fluide, d'un entraînement en rotation, peut être déplacé le long de la face (17) intérieure de l'insert (7, 9) de filtre respectif et qui a, à son extrémité voisine de cette face (17) intérieure, une ouverture (22) de passage en forme de fente d'une largeur (x) de fente pouvant être donnée à l'avance, qui s'étend parallèlement à l'axe de rotation de l'arbre (20) d'entraînement et qui débouche dans un espace (14) d'écoulement communiquant fluidiquement avec l'arbre (20) d'entraînement, dans lequel une distance (a) pouvant être donnée à l'avance est constituée entre l'ouverture (22) de passage de l'organe (10) de lavage en retour respectif et l'insert (7, 9) de filtre pouvant être associé comme voisin,
**caractérisé**
**en ce que** la distance (a) représente de un huitième à une moitié de la largeur (x) de fente de l'ouverture (22) de passage de cet organe (10) de lavage en retour,
**en ce qu'**au moins une partie de l'insert (7, 9) de filtre a, entre deux corps (39 ; 45, 47) d'appui, un tissu (41 ; 43) à plusieurs couches filtrant le non filtrat, et
**en ce que** l'épaisseur (d₁, d₂) des deux corps (39 ; 45, 47) d'appui est respectivement inférieure ou égale à 1,5 fois le largeur (x) de fente de l'ouverture (22) de passage de l'organe (10) de lavage en retour pouvant être associé.

2. Dispositif de filtration suivant la revendication 1, **caractérisé en ce que** la distance (a), entre l'organe (10) de lavage en retour respectif et l'insert (7, 9) de filtre pouvant être associé comme voisin, peut être donnée au moyen d'un dispositif (27) de réglage.

3. Dispositif de filtration suivant la revendication 1 ou 2, **caractérisé en ce que** l'organe (10) de lavage en retour respectif, au moyen de l'arbre (20) d'entraînement tournant, éprouve une vitesse périphérique comprise entre 0,1 et 0,5 m/s.

4. Dispositif de filtration suivant l'une des revendications précédentes, **caractérisé en ce qu'**il y a un lavage en retour complet ou sensiblement complet au moins d'une partie de l'insert (7, 9) de filtre, dès que l'organe (10) de lavage en retour pouvant être associé effectue un tour complet de 360° autour de l'axe longitudinal de l'arbre (20) d'entraînement.

5. Dispositif de filtration suivant l'une des revendications précédentes, **caractérisé en ce que** le tissu (41, 43) à plusieurs couches est constitué d'au moins une couche d'appui et/ou de drainage, de préférence de deux couches de ce genre, ainsi que d'une couche de filtre.

6. Dispositif de filtration suivant l'une des revendications précédentes, **caractérisé en ce que** le tissu (41, 43) à plusieurs couches est constitué en s'étendant de manière lisse ou plissée et **en ce que** l'épaisseur (d₃) du tissu (43) lisse ou la hauteur (h) de pli du tissu (41) plissé est inférieure ou égale à 1,9 fois la largeur (x) de fente.

7. Dispositif de filtration suivant l'une des revendications précédentes, **caractérisé en ce que**, lorsque l'on utilise un tissu (41) plissé, la largeur (b) de pli correspond à la largeur (x) de fente ± 35 % de cette largeur (x) de fente.

8. Dispositif de filtration suivant l'une des revendications précédentes, **caractérisé en ce que** la couche de filtre respective a des traversées (40), dont la largeur est comprise respectivement entre 0,1 et 1000 um, de préférence entre 1 et 100 µm.

9. Dispositif de filtration suivant l'une des revendications précédentes, **caractérisé en ce que** le corps (39 ; 45, 47) d'appui et/ou de protection intérieur et/ou extérieur, tourné et non tourné vers l'organe (10) de lavage en retour, est en une tôle perforée ou en une toile métallique ou en un tamis à fente ou en un métal étiré ou en une structure grillagée ou en un enroulement spiralé avec du fil métallique.

10. Dispositif de filtration suivant l'une des revendications précédentes, **caractérisé en ce que** les couches d'appui et/ou de drainage du tissu (41 ; 43) sont en toile métallique, en grille de métal étiré et/ou en tamis perforé, comme des micro-tamis, et **en ce que** la couche de filtre respective est en tissu, comme en toile métallique, et/ou en non tissé, comme en en non tissé à fibres métalliques.
